# EUROPÄISCHE PATENTSCHRIFT

(11) **EP 0 350 731 B1**
(45) Veröffentlichungstag und Bekanntmachung des Hinweises auf die Patenterteilung: **01.09.1993**
(21) Anmeldenummer: 89111936.4
(22) Anmeldetag: 30.06.1989
(51) Int. Cl.: G11B 20/20, G11B 20/00

(54) **Verfahren zur Ermittlung des Skew-Fehlers bei Magnetband**
Method for determining the skew error on a magnetic tape
Méthode pour déterminer des erreurs d'obliquité sur une bande magnétique

(30) Priorität: 13.07.1988 DE 3823688
(43) Veröffentlichungstag der Anmeldung: 17.01.1990
(73) Patentinhaber: BASF Magnetics GmbH, 68165 Mannheim (DE)
(72) Erfinder: Wenger, Heinz, D-8032 Gräfelfing (DE)
(74) Vertreter: Langfinger, Klaus-Dieter, Dr.

(56) Entgegenhaltungen:
- EP-A- 0 215 234
- US-A- 4 368 492
- WIRELESS WORLD, Bd. 68, November 1962, Seiten 516 - 520; A. HARRIS: "TV tape time stability"
- RADIO AND ELECTRONIC ENGINEER, Bd. 50, Nr. 11, Dezember 1980, London,GB; Seiten 624 - 630; W. FELL: "The influence of the elasticity of magnetic tape on some parameters of magnetic recording"

## Beschreibung

Die Erfindung betrifft ein Verfahren zur Ermittlung des durch Längenänderung eines Magnetbandes zwischen Aufnahme-und Wiedergabe von Videosignalen entstehenden Zeitfehlers bei Schrägspuraufzeichnungen.

Videoaufzeichnungen auf Magnetband werden heutzutage größtenteils in käuflichen Videorecordern im sogenannten Schrägspurverfahren durchgeführt. Einzelheiten dieser Verfahren sind beispielsweise in der Monographie "Handbuch der Film- und Videotechnik", Franzis-Verlag, München, enthalten. Dabei wird ein Magnetband über eine rotierende und mit meistens mehreren Magnetköpfen versehene Trommel unter einem abhängig vom verwendeten Verfahren unterschiedlichen Winkel bewegt, wobei die Umfangsgeschwindigkeit der Kopftrommel meistens wesentlich großer ist als die Geschwindigkeit des Magnetbandes. Beim VHS-Verfahren beispielsweise sind auf der Kopftrommel zwei um 180° versetzte Magnetköpfe angeordnet, wobei jeder Kopf ein Halbbild aufzeichnet und auch wiedergibt und wobei die Informationen des Halbbildes mit einer ausreichenden Überlappungszeit geliefert werden. Bei der Aufnahme entstehen auf diese Weise auf dem Magnetband schräg zur Bandlaufrichtung verlaufende schmale Aufzeichnungsspuren die bei der Wiedergabe mit den gleichen Magnetkopfsystemen abgetastet werden. Tritt nun zwischen Aufnahme und Wiedergabe durch Dehnung oder Schrumpfung eine Längenänderung des Magnetbandes ein, so entsteht bei der Wiedergabe des Videosignals ein Zeitfehler. Untersuchungen haben gezeigt, daß bei dem derzeit üblichen 625 Zeilen-Fernsehübertragungsverfahren, bei dem eine Zeile in 64 µs abgetastet wird, Zeitfehler ab einer Länge von 10 µs zu sichtbaren Bildstörungen führen die sich in Form von Verzerrungen äußern können (Skew-Fehler).

Bisher konnte dieser Zeitfehler in speziellen Fernsehmonitoren, welche mit horizontaler sowie vertikaler Zeilenwechsel-Verzögerung ausgestattet sind, lediglich manuell ausgemessen werden, indem auf dem Bildschirm die entstehende Verzerrung der Kante des 5 µs-Zeilensynchronimpulses (Burst) in Beziehung zur Zeilenlänge gesetzt wurde.

US-A-4 368 492 offenbart ein Verfahren zur Messung eines Skew-Fehlers, wobei die Zeilenlänge eines auf dem Band aufgezeichneten Videosignals verglichen wird mit der Zeilenlänge eines extern zugeführten Refernzsignals.

Deshalb bestand die Aufgabe, ein automatisches Meßverfahren zur Bestimmung des Zeitfehlers zu finden ohne die Notwendigkeit eines externen Referenzsignals. Erfindungsgemäß wurde die Aufgabe gelöst mit einem Verfahren mit den im kennzeichnenden Teil des Anspruchs 1 genannten Merkmalen. Weitere Einzelheiten der Erfindung gehen aus den Unteransprüchen, der Beschreibung und den Figuren hervor.

Im folgenden wird das erfindungsgemäße Verfahren anhand des derzeit üblichen 625 Zeilen-Fernsehübertragungsverfahrens näher geschildert. Selbstverständlich ist das Meßverfahren nicht auf dieses spezielle Verfahren beschränkt, sondern ist auch bei beliebigen anderen Übertragungsverfahren möglich.

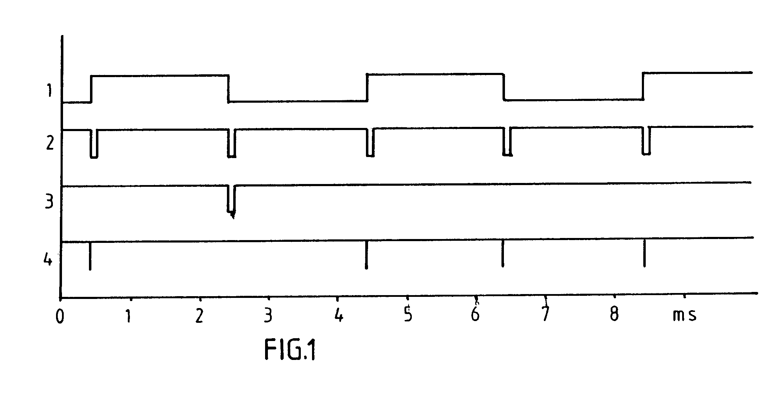

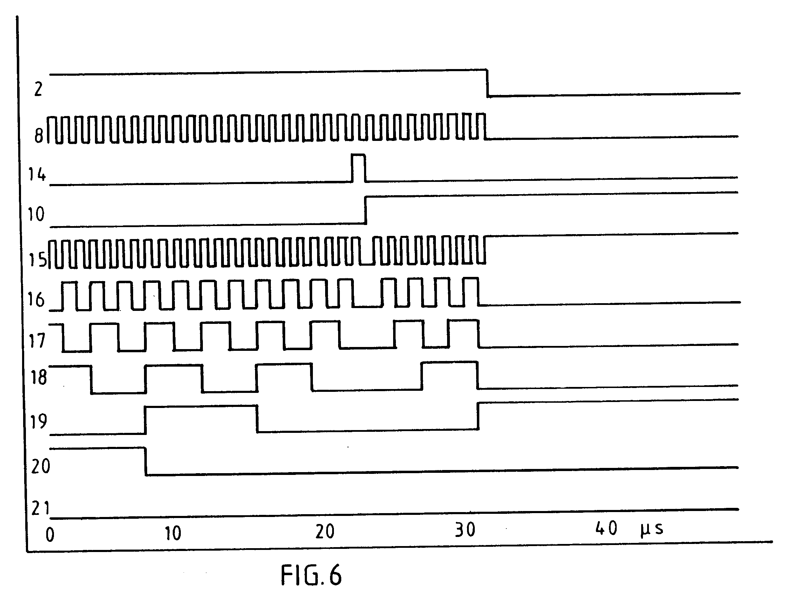

Alle für das erfindungsgemäße Verfahren erforderlichen Zusammenhänge sind in den Zeitdiagrammen gemäß Figur 1 bis 6 dargestellt, wobei die in den betreffenden Figuren angegebenen Ziffern in der anschließenden Tabelle erklärt werden. Im einzelnen bedeuten:
- Figur 1: Zeitdiagramme für Kopftrommelimpuls, Kopfwechselimpuls und Reset, Zeitfenster zur Messung bei dem erfindungsgemäßen Verfahren, Zeitpunkt eines "falschen Ergebnisses" und Zeitpunkt der Meßwertspeicherung.
- Figur 2: Ein Beispiel für einen Zeitfehler, welcher bei einer Schrumpfung des Magnetbandes zwischen Aufnahme und Wiedergabe entsteht.
- Figur 3: Ein Beispiel gemäß Figur 2, wobei jedoch das Signal beim Magnetkopf B verrauscht ist.
- Figur 4: Ein Beispiel, wobei der Zeitfehler durch Längung des Magnetbandes verursacht wird.
- Figur 5: Dieselben Verhältnisse wie in Figur 4, wobei jedoch der Fehler nicht gespeichert wird.
- Figur 6: Ein Beispiel für einen Zeitfehler von 8,5 µs, bei dem die Funktionen angezeigt werden, welche bei Speicherung berücksichtigt werden müssen.

Die Ziffern bedeuten im einzelnen:
1. Kopftrommelimpulse
2. Kopfwechselimpuls bei Zustandswechsel high -> low, Reset-impuls bei low -> high
3. Falsches Ergebnis, welches nicht registriert wird (F, H)
4. Zeitpunkt der Meßwertspeicherung
5. Zeitverlauf eines Signals vom Videokopf A bei einer Grauleiter
6. Zeitverlauf eines Signals vom Videokopf B bei einer Grauleiter
7. Horizontaler Synchronimpuls
8. Taktsignal (jeweils nur einige Schwingungszüge dargestellt
9. H = Zähler "HALT"
10. Zählverlauf: bei low level = 1: Abwärtszählen, bei high level = h: Aufwärtszählen
11. h = Zähler Reset/Voreinstellen
12. h = "verbotener" Kopfumschaltbereich (H)
13. h = verhindert "Doppel-H-Sync." (E)
14. h = Zähler Halt bei "00" (C)
15. - 21. Q0 - Q6, Zähler-Ausgänge.

Bei einem angenommenen Zeitfehler von 10 µs ändert sich die Länge jeder einzelnen Videozeile lediglich um ca. 0,2 µs =̂ 0,3 %. Dagegen wird jene Zeile, in welche der Kopfumschaltimpuls fällt, in ihrer Länge um den gesamten Zeitfehler verändert. Die Länge dieser Zeile abzüglich der gesamten horizontalen Zeilenlänge stellt den Zeitfehler dar.

Normgerecht erfolgt die Kopfumschaltung der beiden Videoköpfe A und B zum Beispiel beim VHS-Verfahren bei 6,5 ± 1,5 horizontalen Zeilen vor dem vertikalen Synchronimpuls, bei 8 mm-Video bei 7 ± 1,8 horizontalen Videozeilen vor dem vertikalen Synchronimpuls. Die Kopfumschaltung ist somit nicht an eine bestimmte Zeile gebunden, so daß eine Messung des Zeitfehlers mittels Zeilenvorwahl nicht infrage kommt.

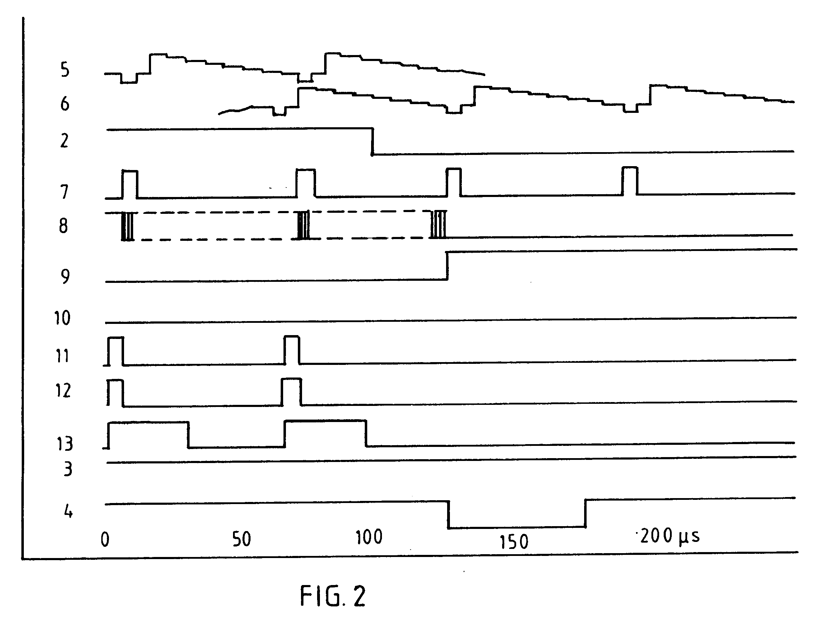

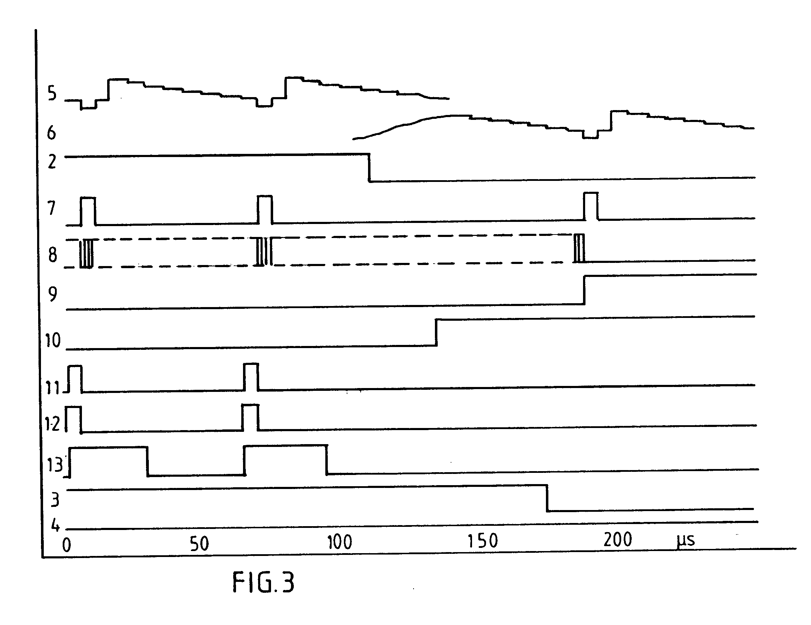

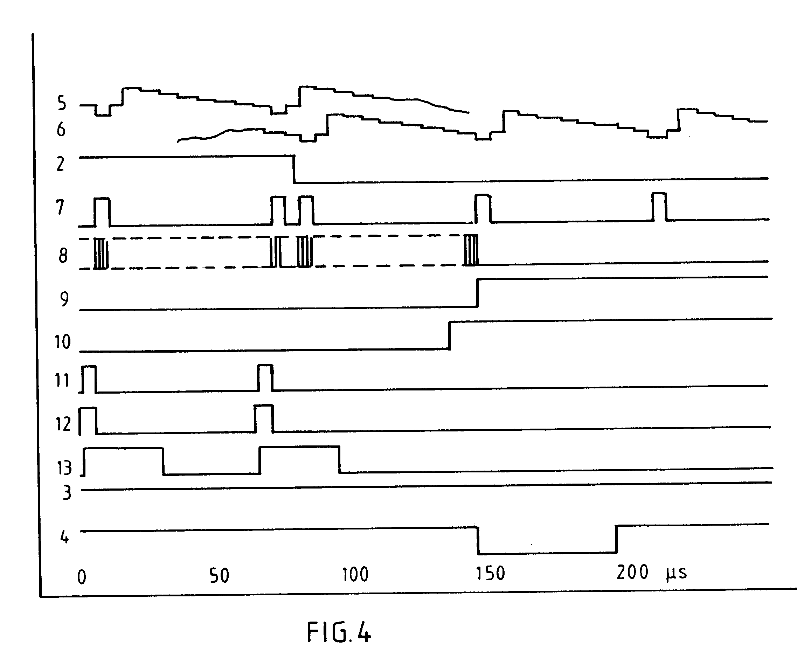

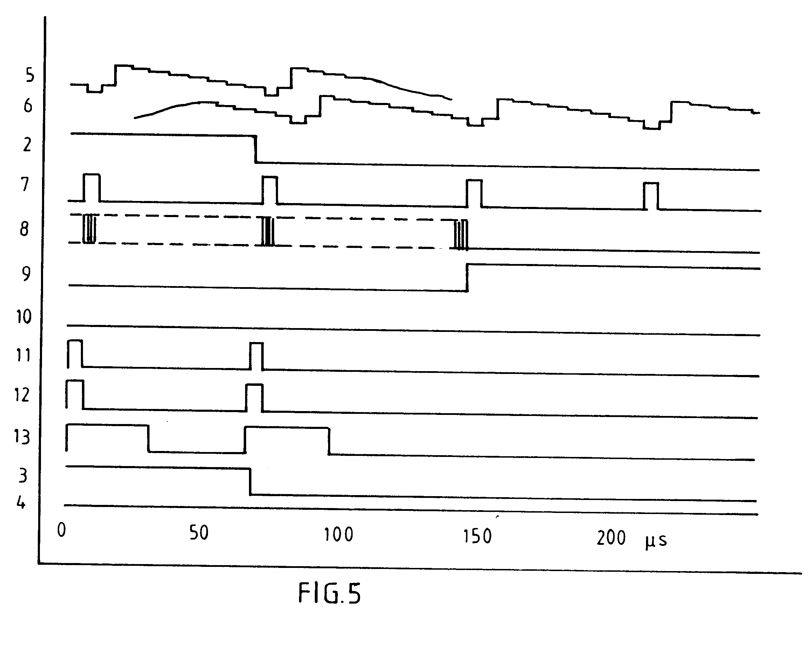

Erfindungsgemäß erfolgt die automatische Erfassung der Zeitfehler-Zeile auf folgende Weise:
A) Ein von einem getakteten Zähler, etwa einem Quarzgenerator oder einem Schwingkreis kommendes Taktsignal beispielsweise 1 MHz wird phasenstarr mit den horizontalen Synchronimpulsen verkoppelt.
B) Ein voreinstellbarer und in Zählrichtung umschaltbarer Zähler, welcher vom Taktgenerator getaktet und vom horizontalen Zeilensynchronimpuls synchronisiert wird, zählt Impulse, beginnend bei einem Zählerstand, welcher der vollen Zeilenlänge vermindert um die maximale Auflösung entspricht bis zum Eintreffen des nächsten horizontalen Zeilenimpulses.
C) Kurz vor dem Erreichen des Zählerstandes "00" wird der Zähler wieder auf den anfänglichen Zählerstand gesetzt und mit dem nachfolgenden horizontalen Synchronimpuls erneut gestartet (Reset).
D) Dieser Vorgang wiederholt sich laufend bis zum Eintreffen des Kopfwechselimpulses. In diesem Fall entfällt der Reset-Vorgang und der Zählvorgang wird vom ersten horiontalen Synchronimpuls nach dem Kopfumschaltimpuls gestoppt. Bei einer verkürzten Zeile entspricht der Zählerstand direkt dem Zeitfehler (Figur 2). Bei einer verlängerten Zeile wird der Zähler beim Stand "00" für einen Takt angehalten, vom Abwärtszählen auf Aufwärtszählen umgeschaltet und wiederum gestartet (Figur 4). Wenn der Zählvorgang vom ersten horizontalen Synchronimpuls nach dem Kopfumschaltimpuls gestoppt wird, entspricht der Zählerstand mit den geänderten Vorzeichen (+) wiederum dem Zeitfehler.
E) Bei einem Zeitfehler mit Zeilenverlängerung kann der Zählvorgang verfälscht werden, wenn unmittelbar auf den Kopfumschaltimpuls folgend ein horizontaler Synchronimpuls folgt (Figur 4). Deshalb wird, in einem vom Zählerstand abhängigen Zeitbereich eine Fehlmessung durch einen "Doppel-H-Synchronimpuls" verhindert. Dieser nachfolgende H-Synchronimpuls darf auch die Taktfrequenz nicht beeinflussen.
F) Wird der Zähler nicht vor dem ersten horizontalen Synchronimpuls nach der Kopfumschaltung gestoppt (zum Beispiel beim Auftreten eines Drop-out-Fehlers im Synchronbereich), wird der Zählvorgang bei Aufwärtszählen ab einem vorgegebenen Zählerstand als falsch erkannt (Figur 3).
G) Durch die unter E) und F) geschilderten Maßnahmen ergibt sich ein sicher erfaßbarer Zeitfehlerbereich von ± einer halben Zeilenlänge =̂ ± 32 µs. Dies ist bei realistischer Betrachtung ausreichend, da bereits bei > 10 µs Bildstörungen auftreten können.
H) Fällt der Kopfwechselimpuls in die Reset-Phase für den Zeitfehler-Zähler, ist eine Messung nicht möglich. Falsche Ergebnisse gemäß F) und H) werden nicht weiterverarbeitet; ihr Auftreten wird angezeigt (Figur 5).
I) Der als gültiges Ergebnis gewertete Zählerstand wird mit dem Vorzeichen für Abwärts-/Aufwärtszählen in einem Speicher geladen und jeweils mit dem nachfolgenden, gültigen Ergebnis überschrieben. Wenn die Phasenlage, welche das Taktsignal im Moment des Anhaltens des Zählers aufweist, ebenfalls gespeichert wird, ist bei einer Taktfrequenz von 1 MHz eine Auflösung in 0,5 µs-Schritten möglich. Bei höheren Taktfrequenzen ist eine höhere Auflösung und Zeilengenauigkeit möglich, während umgekehrt bei niedrigeren Taktfrequenzen auch die Auflösung und Meßgenauigkeit absinkt. Sinnvollerweise sollte die Taktfrequenz nicht unter 500 kHz liegen. Allgemein gesprochen beträgt die maximale Auflösung bei dem 625 Zeilen/50 Hz-Halbbildwechsel-Fernsehsystem bei einer vollen Zeilenlänge von 64 µs und bei einer Frequenz des Taktgenerators 500 kHz oder ein ganzzahliges Vielfaches davon 1 µs geteilt durch das ganzzahlige Vielfache der Taktfrequenz. Analog ist die maximale Auflösung beschaffen bei dem 525 Zeilen/60 Hz-Halbbildwechsel-Fernsehsystem, bei welchem die volle Zeilenlänge 63,5 µs und die Taktfrequenz 500 kHz oder ein ganzzahliges Vielfaches davon beträgt.
K) Das gespeicherte Signal wird digital direkt als Zeitfehler in µs angezeigt. Ein solcher Zähler ist als integrierter Baustein käuflich erhältlich, beispielsweise unter der Bezeichnung CMOS-400 Serie. Das Signal kann aber ebensogut nach Digital/Analog-Umwandlung in analoger Form weiterverarbeitet werden. Auf diese Weise ist mit dem erfindungsgemäßen Verfahren eine einfache und automatische Messung des Zeitfehlers möglich, so daß sich das Verfahren auch für Routineprüfungen von konfektionierten Magnetbändern für alle möglichen Videosysteme eignet.

## Patentansprüche

1. Verfahren zur Ermittlung des durch Längenänderung eines Magnetbandes zwischen Aufnahme und Wiedergabe eines Videosignals entstehenden Zeitfehlers bei Schrägspuraufzeichnung, dadurch gekennzeichnet, daß ein Taktgenerator mit dem horizontalen Zeilensynchronimpuls des Videosignals phasenstarr gekoppelt wird und ein voreinstellbarer und in Zählrichtung umschaltbarer Zähler, welcher vom Taktgenerator getaktet wird und vom horizontalen Zeilensynchronimpuls synchronisiert wird, die Impulse beginnend bei einem Zählerstand, welcher der vollen Zeilenlänge vermindert um die maximale Auflösung entspricht, bis zum Eintreffen des nächsten horizontalen Zeilenimpulses zählt, wobei der Zeitfehler der Differenz zwischen nominaler Zeilenlänge und tatsächlicher Länge der Zeile entspricht, in welche der Kopfumschaltimpuls fällt.

2. Verfahren nach Anspruch 1, dadurch gekennzeichnet, daß bei dem 625 Zeilen/50 Hz-Halbbildwechsel-Fernsehsystem bei einer vollen Zeilenlänge von 64 µs die Frequenz des Taktgenerators 500 kHz oder ein ganzzahliges Vielfaches davon beträgt und die maximale Auflösung 1 µs geteilt durch das ganzzahlige Vielfache der Taktfrequenz beträgt.

3. Verfahren nach Anspruch 1, dadurch gekennzeichnet, daß bei dem 525 Zeilen/60 Hz-Halbbildwechsel-Fernsehsystem die volle Zeilenlänge 63,5 µs und die Taktfrequenz 500 kHz oder ein ganzzahliges Vielfaches davon beträgt.

## Claims

1. A method for determining the time error occurring as a result of the change in length of a magnetic tape between recording and playback of a video signal during helical scan recording, wherein a pulse generator is phase-locked with the horizontal line synchronizing pulse of the video signal and a presettable counter which is switchable in the counting direction and is timed by the pulse generator and synchronized by the horizontal line synchronizing pulse counts the pulses beginning at a counter reading which corresponds to the full line length reduced by the minimum measureable time error until the occurrence of the next horizontal line pulse, the time error corresponding to the difference between nominal line length and actual length of the line in which the head switching pulse occurs.

2. A method as claimed in claim 1, wherein, in the case of the 625 line/50 Hz field-change television system, at a full line length of 64 µs, the frequency of the pulse generator is 500 kHz or an integral multiple thereof and the minimum measurable time error is 1 µs divided by the integral multiple of the pulse frequency.

3. A method as claimed in claim 1, wherein, in the case of the 525 line/50 Hz field-change television system, the full line length is 63.5 µs and the pulse frequency is 500 kHz or an integral multiple thereof.

## Revendications

1. Procédé de détermination de l'erreur de temps produite par changement de longueur d'une bande magnétique entre l'enregistrement et la lecture d'un signal vidéo en cas d'enregistrement hélicoïdal, caractérisé par le fait qu'on couple rigidement en phase un générateur d'horloge à l'impulsion de synchronisation de ligne horizontale du signal vidéo et qu'un compteur préréglable et à sens de comptage réversible, qui est rythmé par le générateur d'horloge et synchronisé par l'impulsion de synchronisation de ligne horizontale, compte les impulsions en commençant à un état qui correspond à la longueur totale de ligne diminuée de l'erreur de temps minimale détectable et jusqu'à l'arrivée de l'impulsion de ligne horizontale suivante, l'erreur de temps correspondant à la différence entre la longueur nominale de ligne et la longueur effective de la ligne sur laquelle tombe l'impulsion de commutation des têtes.

2. Procédé selon la revendication 1, caractérisé par le fait que, dans le cas du système de télévision à changement de demi-image 625 lignes/50 Hz avec une longueur totale de ligne de 64 µs, la fréquence du générateur d'horloge est de 500 kHz ou d'un multiple entier de cette valeur et l'erreur de temps minimale détectable est de 1 µs divisée par le multiple entier de la fréquence de rythme.

3. Procédé selon la revendication 1, caractérisé par le fait que, dans le cas du système de télévision à changement de demi-image 525 lignes/60 Hz, la longueur totale de ligne est de 63,5 µs et la fréquence de rythme de 500 kHz ou d'un multiple entier de cette valeur.
